(19) Europäisches Patentamt
European Patent Office
Office européen des brevets

(11) **EP 1 867 845 B1**

(12) **EUROPEAN PATENT SPECIFICATION**

(45) Date of publication and mention
of the grant of the patent:
**25.02.2009 Bulletin 2009/09**

(51) Int Cl.:
*F01N 3/021* (2006.01)  *F01N 9/00* (2006.01)
*F02D 41/00* (2006.01)  *F02D 41/02* (2006.01)

(21) Application number: **07110123.2**

(22) Date of filing: **12.06.2007**

(54) **Exhaust purification device of internal combustion engine and corresponding method**

Abgasreinigungsvorrichtung eines Verbrennungsmotors und entsprechendes Verfahren

Dispositif de purification de gaz d'échappement de moteur à combustion interne et procédé correspondant

(84) Designated Contracting States:
**DE FR GB IT**

(30) Priority: **12.06.2006 JP 2006162344**

(43) Date of publication of application:
**19.12.2007 Bulletin 2007/51**

(73) Proprietor: **Toyota Jidosha Kabushiki Kaisha
Toyota-shi
Aichi 471-8571 (JP)**

(72) Inventor: **Ono, Tomoyuki
Toyota-shi, Aichi-ken 471-8571 (JP)**

(74) Representative: **Intes, Didier Gérard André et al
Cabinet Beau de Loménie
158, rue de l'Université
75340 Paris Cedex 07 (FR)**

(56) References cited:
**EP-A1- 1 498 594  DE-A1- 19 753 842
JP-A- 2001 020 799**

**Description**

BACKGROUND OF THE INVENTION

1. Field of the Invention

The invention relates to an exhaust purification device of an internal combustion engine and an exhaust purification method of an internal combustion engine.

2. Description of the Related Art

In conjunction with an exhaust purification device of an internal combustion engine equipped with an EGR (Exhaust Gas Recirculation) passage connecting an exhaust passage downstream of a particulate filter and an intake passage downstream of an air flow meter, a technology of performing determination regarding the clogging of the particulate filter on the basis of the differential pressure between an upstream side and a downstream side of the particulate filter is known (e.g. see Japanese patent appln. publication No. JP-A-2045-69207).

Since the amount of exhaust gas that passes through the particulate filter is a sum of the amount of exhaust gas that passes through the EGR passage, the amount of fresh air taken into the internal combustion engine, and the amount of fuel supplied to the internal combustion engine. The amount of exhaust gas that passes through the particulate filter changes if the degree of opening of an EGR valve provided in the EGR passage is changed.

When the regeneration process of the particulate filter is performed, the temperature of the particulate filter is raised to a temperature at which PM (particulate matter) is oxidized. At this time, the temperature of the particulate filter is controlled so that the temperature of the particulate filter reaches a desired temperature.

In some cases, in order to perform the temperature control of the particulate filter, an amount of change in the temperature is found from the amount of exhaust gas that passes through the particulate filter. That is, the temperature rise value of the filter is sometimes estimated by estimating the amount of heat that transfers from exhaust gas to the filter on the basis of the amount of exhaust gas that passes through the filter and the temperature of the exhaust gas. However, since the amount of exhaust gas that passes through the filter changes if the amount of exhaust gas that passes through the EGR passage changes as mentioned above, the amount of exhaust gas that passes through the filter cannot be found merely by measuring the intake fresh air amount. Therefore, it becomes difficult to accurately find the temperature rise value of the filter.

In the background of the invention, it is also known DE 197 53 842 that discloses a method to determine when to discontinue auxiliary heating of catalyst from cold start, as well as EP 1 498 594 that discloses an exhaust control apparatus according to the preamble of claim 1.

SUMMARY OF THE INVENTION

The invention provides a technology capable of more accurately finding the temperature of a particulate filter in an exhaust purification device of an internal combustion engine and an exhaust purification method of an internal combustion engine.

An exhaust purification device of an internal combustion engine according to a first aspect of the invention is characterized by including: a particulate filter that is provided in an exhaust passage and that traps a particulate matter in exhaust gas; filter-passing gas amount detection means for detecting an amount of exhaust gas that passes through the particulate filter based on a differential pressure between an upstream side and a downstream side of the particulate filter or the amount of exhaust gas that passes in an EGR passage through which a portion of the exhaust gas that flows in the exhaust passage is recirculated to an intake passage; exhaust gas temperature detection means for detecting a temperature of exhaust gas that flows into the particulate filter; and filter temperature estimation means for estimating a temperature of the particulate filter by estimating an amount of heat that exhaust gas gives to the particulate filter based on the amount of exhaust gas detected by the filter-passing gas amount detection means and the temperature of exhaust gas detected by the exhaust gas temperature detection means.

An exhaust purification device of an internal combustion engine according to of a second aspect of the invention, which is based on the first aspect, further includes:

intake air amount detection means for detecting an amount of fresh air that flows in the intake passage; an EGR passage that connects the exhaust passage downstream of the particulate filter and the intake passage downstream of the intake air amount detection means and that recirculates a portion of the exhaust gas that flows in the exhaust passage to the intake passage; and EGR gas amount estimation means for estimating the amount of exhaust gas that flows in the EGR passage, wherein the filter-passing gas amount detection means detects the amount of exhaust gas that passes through the particulate filter based on the amount of exhaust gas estimated by the EGR gas amount estimation means and the amount of fresh air detected by the intake air amount detection means.

The amount of exhaust gas that passes through the particulate filter and the temperature of the exhaust gas that flows into the particulate filter correlate with the value of rise in the temperature of the particulate filter. That is, the temperature of the particulate filter can be estimated by finding the value of rise in the temperature of the particulate filter from the amount of exhaust gas that passes through the particulate filter and the temperature of the exhaust gas that flows into the particulate filter. In order to accurately estimate the temperature of the particulate filter in this manner, there is a need to accurately find the aforementioned amount of exhaust gas and the aforementioned temperature of the exhaust gas. Incidentally, the mass and the specific heat of the particulate filter are sometimes needed as well in order to find the value of rise in the temperature of the particulate filter, and the mass and the specific heat thereof can be found beforehand.

It is to be noted herein that when exhaust gas is not flowing in the EGR passage, the sum of the amount of fresh air detected by the intake air amount detection means and the amount of fuel supplied into the cylinders becomes substantially equal to the amount of exhaust gas that passes through the particulate filter. However, when exhaust gas is caused to flow in the EGR passage, the sum of the amount of fresh air and the amount of fuel becomes different from the amount of exhaust gas that passes through the particulate filter since the EGR passage connects the exhaust passage downstream of the particulate filter and the intake passage downstream of the intake air amount detection means.

Actually, the amount of exhaust gas that passes through the particulate filter can be found as the sum of the amount of fresh air detected by the intake air amount detection means, the amount of exhaust gas estimated by the EGR gas amount estimation means, and the amount of fuel supplied into the cylinders. From this relationship, the filter-passing gas amount detection means detects the amount of exhaust gas that passes through the particulate filter.

Incidentally, the exhaust gas temperature detection means may directly detect the temperature of the exhaust gas that passes through the particulate filter, or may also estimate the temperature thereof from the state of operation of the internal combustion engine.

In this manner, the amount of exhaust gas that passes through the particulate filter and the temperature of the exhaust gas that flows into the particulate filter can be obtained, so that using these values, the filter temperature estimation means can estimate the temperature of the particulate filter.

An exhaust purification device of an internal combustion engine according to a third aspect of the invention, based on the second aspect, further includes intake air pressure detection means for detecting a pressure in the intake passage at a downstream side of a site to which the EGR passage is connected, wherein the EGR gas amount estimation means stores a relationship between the amount of fresh air detected by the intake air amount detection means, the pressure detected by the intake air pressure detection means, and the amount of exhaust gas that flows in the EGR passage, and estimates the amount of exhaust gas that flows in the EGR passage from the relationship.

It is to be noted herein that if the amount of EGR gas that flows in the EGR passage increases, the amount of fresh air in the gas that is taken into the cylinders decreases by the amount of increase of EGR gas. That is, even if the EGR gas amount increases, the fresh air amount correspondingly decreases, so that the amount of gas taken into the cylinders does not change. The amount of gas taken into the cylinders correlates with the pressure in the intake passage. Therefore, the pressure in the intake passage at the downstream side of the site of connection with the EGR passage remains unchanged even if the amount of EGR gas increases or decreases.

Hence, a relationship among the amount of exhaust gas that passes through the EGR passage, the amount of fresh air detected by the intake air amount detection means, and the pressure in the intake passage can be found through experiments or the like beforehand. Then, by detecting the amount of fresh air via the intake air amount detection means and detecting the pressure in the intake passage at the downstream side of the site of connection with the EGR passage via the intake air pressure detection means, the amount of exhaust gas that passes through the EGR passage can be found.

An exhaust purification device of an internal combustion engine according to a fourth aspect of the invention, based on the first aspect, further includes: differential pressure detection means for detecting the differential pressure between the upstream side and the downstream side of the particulate filter; clogging estimation means for estimating a degree of clogging of the particulate filter; and clog-caused differential pressure estimation means for estimating a portion of the differential pressure detected by the differential pressure detection means which is caused by clogging of the particulate filter, based on the degree of clogging of the particulate filter estimated by the clogging estimation means, wherein the filter-passing gas amount detection means detects the amount of exhaust gas that passes through the particulate filter, based on a value obtained by subtracting the differential pressure estimated by the clog-caused differential pressure estimation means from the differential pressure detected by the differential pressure detection means.

The degree of clogging of the particulate filter estimated by the clogging estimation means may be the degree of increase of the resistance of exhaust gas that is caused by the particulate matter trapped on the particulate filter, or may also be the amount of particulate matter trapped on the particulate filter. Furthermore, the degree of clogging of the particulate filter may be a value that correlates with the increase of the resistance of exhaust gas.

Then, the clog-caused differential pressure estimation means estimates the differential pressure that occurs in accordance with the degree of clogging of the particulate filter.

Generally, the differential pressure between the upstream side and the downstream side of the particulate filter correlates with the amount of exhaust gas that passes through the particulate filter. Therefore, the amount of exhaust gas that passes through the particulate filter can be found from the differential pressure. However, if large amount of particulate matter deposits on the particulate filter, the resistance of exhaust gas becomes large. Due to this, the differential pressure becomes large. Therefore, in the case where the amount of exhaust gas that passes through the particulate filter is found on the basis of the differential pressure, there is a possibility of incorrectly finding the amount of exhaust gas that passes through the particulate filter because the resistance of exhaust gas becomes large.

That is, since the differential pressure changes depending on either of the resistance of exhaust gas and the amount of exhaust gas that passes through the particulate filter, the amount of exhaust gas that passes through the particulate filter is found after exclusion of the amount of differential pressure corresponding to or caused by the resistance of exhaust gas. That is, the amount of increase in differential pressure caused by the deposition of particulate matter on the particulate filter is removed from the detected differential pressure, so that the differential pressure corresponding to the amount of exhaust gas can be found. Therefore, the amount of exhaust gas that passes through the particulate filter can be further accurately found.

An exhaust purification device of an internal combustion engine according to a fifth aspect of the invention, based on the first aspect, further includes: intake air amount detection means for detecting an amount of fresh air that flows in the intake passage; an EGR passage that connects the exhaust passage downstream of the particulate filter and the intake passage downstream of the intake air amount detection means and that recirculates a portion of the exhaust gas that flows in the exhaust passage to the intake passage; and intake air-fuel ratio detection means for detecting an air-fuel ratio in the intake passage at a downstream side of a site to which the EGR passage is connected, wherein the filter-passing gas amount detection means detects the amount of exhaust gas that passes through the particulate filter based on the amount of fresh air detected by the intake air amount detection means, an amount of fuel supplied to the internal combustion engine, and the air-fuel ratio detected by the intake air-fuel ratio detection means.

The intake air-fuel ratio detection means detects the air-fuel ratio occurring after fresh air and EGR gas mix. Since fresh air does not contain fuel, the amount in the air-fuel ratio detected by the intake air-fuel ratio detection means which corresponds to the fuel is from the EGR gas. Then, the gas whose air-fuel ratio is equal to that detected by the intake air-fuel ratio detection means is introduced into the cylinders of the internal combustion engine.

Since the fresh air amount and the air-fuel ratio of intake air are known, the EGR gas amount taken into the internal combustion engine can be calculated on the basis of the fresh air amount of the air-fuel ratio.

Furthermore, the amount of exhaust gas that passes through the particulate filter becomes equal to the amount of exhaust gas from the internal combustion engine. That is, by finding the amount of gas discharged from the internal combustion engine, the amount of exhaust gas that passes through the particulate filter can be found. As described above, the gas introduced into the internal combustion engine is a mixture of fresh air and EGR gas. A gas formed after fuel is added to the mixture is discharged from the internal combustion engine.

The amount of fresh air introduced into the internal combustion engine is detected by the intake air amount detection means. The amount of EGR gas introduced into the internal combustion engine can be found on the basis of the fresh air amount detected by the intake air amount detection means, and the air-fuel ratio detected by the intake air-fuel ratio detection means. The amount of fuel can be found, for example, from a command value that is provided from a device that controls the internal combustion engine.

On the basis of theses values or the like, the amount of exhaust gas that passes through the particulate filter can be calculated. From this amount of exhaust gas, the temperature of the particulate filter can be calculated. Since the EGR amount can be accurately found from the value detected by the intake air-fuel ratio detection means, the temperature of the particulate filter can be further accurately found.

An exhaust purification method of an internal combustion engine according to a sixth aspect of the invention includes: a first step of finding an amount of exhaust gas that passes through a particulate filter based on amounts of gasses, including an EGR gas, that flow into or out of a passage extending from an intake passage to the particulate filter; and a second step of estimating a temperature of the particulate filter from an amount of heat given to the particulate filter which is obtained based on the amount of exhaust gas obtained in the first step and a temperature of exhaust gas that flows into the particulate filter.

That is, if a gas flows into and another gas flows out of a gas-conducting passage that extends from the intake passage to the particulate filter, the rest amount of gas can be found by finding the difference between the inflow gas and the outflow gas. The rest amount of gas passes through the particulate filter.

Furthermore, the amount of heat that exhaust gas gives to the particulate filter can be found on the basis of the amount of exhaust gas that passes through the particulate filter and the temperature of the exhaust gas that flows into the particulate filter. Since this amount of heat correlates with the temperature of the particulate filter, the temperature of the particulate filter can be found on the basis of the amount of heat.

An exhaust purification method of an internal combustion engine according to a seventh aspect of the invention includes the steps of: detecting an amount of exhaust gas that passes through a particulate filter based on an amount of exhaust gas that flows in an EGR passage that recirculates a portion of the exhaust gas that flows in an exhaust passage to an intake passage or based on a differential pressure between an upstream side and a downstream side of the particulate filter; detecting a temperature of exhaust gas that flows into the particulate filter; and estimating a temperature of the particulate filter by estimating an amount of heat that exhaust gas gives to the particulate filter based on the detected amount of exhaust gas that passes through the particulate filter and the detected temperature of exhaust gas.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG 1 is a schematic diagram showing an internal combustion engine and its intake/exhaust system to which an exhaust purification device in accordance with Embodiments is applied;
FIG. 2 is a flowchart showing a process flow of calculating the bed temperature of the filter according to Embodiment 1;
FIG. 3 is a diagram showing an example of a relationship among the intake fresh air amount Ga, the intake air pressure Pim, and the low-pressure EGR gas amount Gegr that passes through a low-pressure EGR valve;
FIG 4 is a flowchart showing a process flow of calculating the bed temperature of a filter according to Embodiment 2;
FIG 5 is a diagram showing a relationship between the differential pressure $\Delta P$ and the trapped amount Gpm;
FIG. 6 is a flowchart showing a process flow of finding the degree of clogging of the filter according to Embodiment 2; and
FIG. 7 is a flowchart showing a process flow of calculating the bed temperature of the filter according to Embodiment 3.

DETAILED DESCRIPTION OF THE PREFERRED EMBODIMENTS

Concrete embodiments of an exhaust purification device of an internal combustion engine in accordance with the invention will be described hereinafter with reference to the drawings.

EMBODIMENT 1

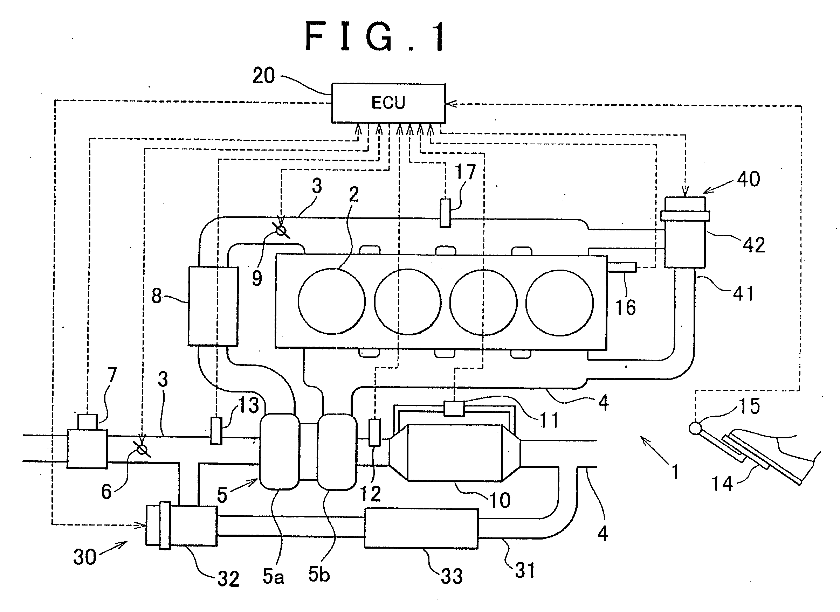

FIG 1 is a schematic diagram showing an internal combustion engine and its intake/exhaust system to which an exhaust purification device in accordance with Embodiment 1 is applied. An internal combustion engine 1 shown in FIG. 1 is a water-cooled four-stroke diesel engine that has four cylinders 2.

An intake pipe 3 and an exhaust pipe 4 are connected to the internal combustion engine 1. An intermediate portion of the intake pipe 3 is provided with a compressor housing 5a of a turbocharger 5 that operates using energy of exhaust gas as a drive source. The intake pipe 3 upstream of the compressor housing 5a is provided with a first throttle 6 that adjusts the amount of flow of intake air that flows in the intake pipe 3. The first throttle 6 is opened and closed by an electric actuator. The intake pipe 3 upstream of the first throttle 6 is provided with an air flow meter 7 that outputs a signal corresponding to the amount of flow of intake air that flows in the intake pipe 3. Using the air flow meter 7, an intake fresh air amount of the internal combustion engine 1 is measured. In this embodiment, the air flow meter 7 corresponds to intake air amount detection means in the invention.

The intake pipe 3 downstream of the compressor housing 5a is provided with an intercooler 8 that allows heat exchange between intake air and external air. The intake pipe 3 downstream of the intercooler 8 is provided with a second throttle 9 that adjusts the amount of flow of intake air that flows in the intake pipe 3. The second throttle 9 is opened and closed by an electric actuator.

On the other hand, an intermediate portion of the exhaust pipe 4 is provided with a turbine housing 5b of the aforementioned turbocharger 5. The exhaust pipe 4 downstream of the turbine housing 5b is provided with a particulate filter (hereinafter, referred to simply as "filter") 10. The filter 10 is loaded with a storage reduction type NOx catalyst (hereinafter, referred to simply as "NOx catalyst"). The particulate filter 10 traps particulate matter in exhaust gas. The NOx catalyst stores nitrogen oxides (NOx) in exhaust gas when the oxygen concentration in exhaust gas that flows into the NOx catalyst is high, and the NOx catalyst releases stored NOx when the oxygen concentration in exhaust gas that flows into the NOx catalyst becomes low. At that time, if a reducing component, such as hydrocarbon (HC), carbon monoxide (CO), etc., exists in exhaust gas, the NOx released from the NOx catalyst is reduced.

A differential pressure sensor 11 that measures the pressure difference between an upstream side and a downstream side of the filter 10 is attached to the filter 10. Using the differential pressure sensor 11, the amount of particulate matter (hereinafter, also referred to as "PM") trapped by the filter 10 can be detected. In this embodiment, the differential pressure sensor 11 corresponds to differential pressure detection means in the invention.

The exhaust pipe 4 upstream of the filter 10 and downstream of the turbine housing 5b is provided with an exhaust gas temperature sensor 12 that detects the temperature of the exhaust gas that flows in the exhaust pipe 4. Using the exhaust gas temperature sensor 12, the temperature of the filter 10 is measured. In this embodiment, the exhaust gas temperature sensor 12 corresponds to exhaust gas temperature detection means in the invention.

The internal combustion engine 1 is equipped with a low-pressure EGR device 30 that recirculates a portion of the exhaust gas that flows in the exhaust pipe 4 to the intake pipe 3 with low pressure. The low-pressure EGR device 30 includes a low-pressure EGR passage 31, a low-pressure EGR valve 32, and an EGR cooler 33.

The low-pressure EGR passage 31 connects the exhaust pipe 4 at the downstream side of the filter 10 and the intake pipe 3 that is upstream of the compressor housing 5a and downstream of the first throttle 6. Through the low-pressure EGR passage 31, exhaust gas is recirculated at low pressure. In this embodiment, the exhaust gas recirculated through the low-pressure EGR passage 31 is termed low-pressure EGR gas.

The low-pressure EGR valve 32 adjusts the amount of low-pressure EGR gas that flows through the low-pressure EGR passage 31 by adjusting the passage cross-sectional area of the low-pressure EGR passage 31. Furthermore, the EGR cooler 33 allows heat exchange between the low-pressure EGR gas passing through the EGR cooler 33 and the cooling water of the internal combustion engine 1 so as to lower the temperature of the low-pressure EGR gas.

Furthermore, the internal combustion engine 1 is equipped with a high-pressure EGR device 40 that recirculates a portion of the exhaust gas that flows in the exhaust pipe 4, to the intake pipe 3 with high pressure. The high-pressure EGR device 40 includes a high-pressure EGR passage 41, and a high-pressure EGR valve 42.

The high-pressure EGR passage 41 connects the exhaust pipe 4 at the upstream side of the turbine housing 5b and the intake pipe 3 downstream of the second throttle 9. Through the high-pressure EGR passage 41, exhaust gas is recirculated at high pressure. In this embodiment, the exhaust gas recirculated through the high-pressure EGR passage 41 is termed high-pressure EGR gas.

The high-pressure EGR valve 42 adjusts the amount of high-pressure EGR gas that flows through the high-pressure EGR passage 41 by adjusting the passage cross-sectional area of the high-pressure EGR passage 41.

The intake pipe 3 that is downstream of a site to which the low-pressure EGR passage 31 is connected and that is upstream of the compressor housing 5a is provided with an intake air-fuel ratio sensor 13 that detects the air-fuel ratio of intake air that flows in the intake pipe 3. In this embodiment, the intake air-fuel ratio sensor 13 corresponds to intake air-fuel ratio detection means in the invention. The intake pipe 3 downstream of the second throttle 9 is provided with an intake air pressure sensor 17 that detects the pressure in the intake pipe 3. In this embodiment, the intake air pressure sensor 17 corresponds to intake air pressure detection means in the invention.

The internal combustion engine 1 constructed as described above is equipped with an ECU 20 that is an electronic control unit for controlling the internal combustion engine 1. The ECU 20 is a unit that controls the state of operation of the internal combustion engine 1 in accordance with the operating condition of the internal combustion engine 1 and a request of a driver. Besides the aforementioned sensors, other sensors are also connected to the ECU 20 via electrical wiring, including an accelerator operation amount sensor 15 that outputs an electric signal corresponding to the amount of depression of an accelerator pedal 14 caused by the driver and that is capable of detection of the engine load, and a crank position sensor 16 that detects the engine rotation speed. The output signals of theses various sensors are input to the ECU 20. Furthermore, the first throttle 6, the second throttle 9, the low-pressure EGR valve 32, and the high-pressure EGR valve 42 are connected to the ECU 20 via electric wiring, and these appliances are controlled by the ECU 20.

In this embodiment, the amount of exhaust gas that passes through the filter 10 is estimated, and the temperature (bed temperature) of the filter 10 is calculated from the estimated amount of exhaust gas, the temperature of the exhaust gas, etc. The amount of exhaust gas that passes through the filter 10 is a sum of the amount of fresh air detected by the air flow meter 7, the low-pressure EGR gas amount recirculated from the low-pressure EGR passage 31 to the intake pipe 3, and the amount of fuel supplied to the cylinders 2. Heat of the exhaust gas that passes through the filter 10 raises the temperature of the filter 10. The value of rise in the temperature of the filter 10 can be found on the basis of the amount of exhaust gas that passes through the filter 10 and the temperature of the exhaust gas. In this manner, the temperature of the filter 10 can be calculated.

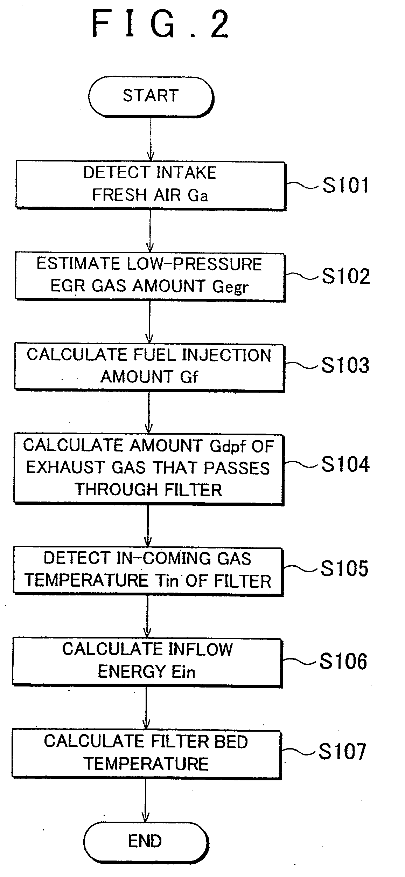

Next, a process flow of calculating the bed temperature of the filter 10 in this embodiment will be described. FIG 2 is a flowchart showing the process flow of calculating the bed temperature of the filter 10 according to the embodiment. This routine is executed repeatedly at every predetermined time.

In step S101, an intake fresh air amount Ga is detected by the air flow meter 7.

In step S102, the low-pressure EGR gas amount Gegr passing through the low-pressure EGR valve 32 is estimated. The low-pressure EGR gas amount Gegr can be obtained on the basis of the intake fresh air amount Ga detected by the air flow meter 7 and an intake air pressure Pim obtained via the intake air pressure sensor 17.

It is to be noted herein that when the low-pressure EGR gas amount Gegr increases, the intake fresh air amount Ga decreases. Thus, even when the low-pressure EGR gas amount Gegr increases, the total amount of gas taken into the cylinders 2 remains unchanged. This also applies to the case where the low-pressure EGR gas amount Gegr decreases. That is, even when the low-pressure EGR gas amount increases or decreases, the pressure in the intake pipe 3 downstream of the site of connection with the low-pressure EGR passage 31 does not change provided that the state of operation of the internal combustion engine 1 remains unchanged.

Therefore, if a relationship among the low-pressure EGR gas amount Gegr that passes through the low-pressure EGR valve 32, the intake fresh air amount Ga detected by the air flow meter 7, and the intake air pressure Pim obtained via the intake air pressure sensor 17 is found through experiments or the like and represented in a map beforehand, the low-pressure EGR gas amount Gegr that passes through the low-pressure EGR valve 32 can be found by substituting the detected values from the air flow meter 7 and the intake air pressure sensor 17 in the map.

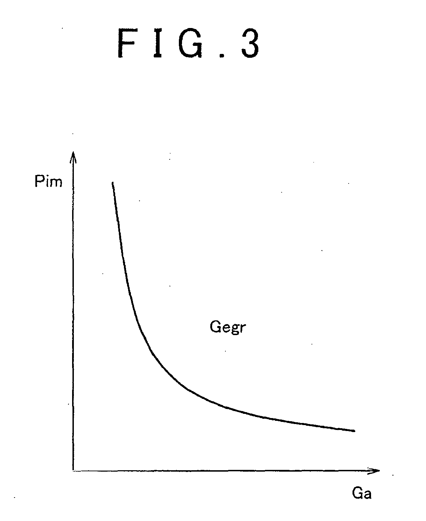

FIG. 3 is a diagram showing an example of the relationship among the intake fresh air amount Ga, the intake air pressure Pim, and the low-pressure EGR gas amount Gegr that passes through the low-pressure EGR valve 32. This relationship is found through experiments or the like and stored in the ECU 20 beforehand. In this embodiment, the ECU 20 executing the process of step S102 corresponds to EGR gas amount estimation means in the invention.

In step 5103, a fuel injection amount Gf is calculated. The fuel injection amount Gf is the amount of fuel injected into the cylinders 2, and is a value that the ECU 20 calculates on the basis of the engine rotation speed, the engine load, etc.

In step S104, the amount Gdpf of exhaust gas that passes through the filter 10 is calculated. The amount Gdpf of exhaust gas that passes through the filter 10 can be found as a sum of the fresh air amount Ga calculated in step S101, the low-pressure EGR gas amount Gegr calculated in step S102, and the fuel injection amount Gf calculated in step S103. In this embodiment, the ECU 20 executing the process of step S104 corresponds to filter-passing gas amount detection means.

In step S105, an in-coming gas temperature Tin of the filter 10 is detected. The in-coming gas temperature Tin of the filter 10 is the temperature of the exhaust gas that flows into the filter 10, and can be obtained via the exhaust gas temperature sensor 12.

In step S106, an energy Ein that flows into the filter 10 is calculated. The energy Ein is used in order to find the temperature rise value of the filter 10. The inflow energy Ein can be obtained using the following equation. $Ein = Gdpf \times R \times Tin$

where R is a gas constant of exhaust gas.

In step S107, the bed temperature of the filter 10 is calculated. Herein, the temperature rise value dT of the filter 10 can be found as a value obtained by dividing the energy given to the filter 10 by the specific heat $\kappa$ of the filter 10 and the mass M of the filter 10.

That is, the inflow energy Ein can be found using the following equation:

$$dT = Ein(\kappa \cdot M)$$

In this manner, on the basis of the temperature of the exhaust gas that flows into the filter 10 at the present time, the temperature rise value dT of the filter 10 can be found. Therefore, by adding the temperature rise value dT to the present-time temperature of the filter 10, a subsequent temperature of the filter 10 can be estimated. In this embodiment, the ECU 20 executing the processes of step S106 and step S107 corresponds to filter temperature estimation means in the invention.

As described above, according to this embodiment, the bed temperature of the filter 10 can be more accurately found, so that it becomes easy to control the temperature of the filter 10 at the times of regeneration of the filter 10 and removal of NOx as well as recovery from sulfur poisoning. Therefore, these controls can be efficiently performed.

EMBODIMENT 2

In Embodiment 2, the degree of clogging of the filter 10 is taken into account when the amount of exhaust gas that passes through the filter 10 is detected through the use of the differential pressure between the upstream side and the downstream side of the filter 10.

The detection of the differential pressure between the upstream side and the downstream side of the filter 10 makes it possible to find the amount of exhaust gas that passes through the filter 10. However, if PM deposits on the filter 10, the resistance through the filter 10 becomes larger, so that the differential pressure between the upstream side and the downstream side of the filter 10 changes. This changes the relationship between the amount of exhaust gas that passes through the filter 10 and the differential pressure across the filter 10, so that it becomes difficult to accurately find the amount of exhaust gas that passes through the filter 10 on the basis of the differential pressure if no countermeasure is taken.

In this respect, in this embodiment, the amount of change in the differential pressure caused by the PM deposit on the filter 10 is removed from the differential pressure detected by the differential pressure sensor 11, so as to detect only the differential pressure that occurs in accordance with the amount of exhaust gas that passes through the filter 10. On the basis of this differential pressure, the amount of exhaust gas that passes through the filter 10 is calculated, and in turn, on the basis of this amount of exhaust gas, the temperature of the filter 10 is calculated. Thus, the temperature of the filter 10 can be found with good accuracy.

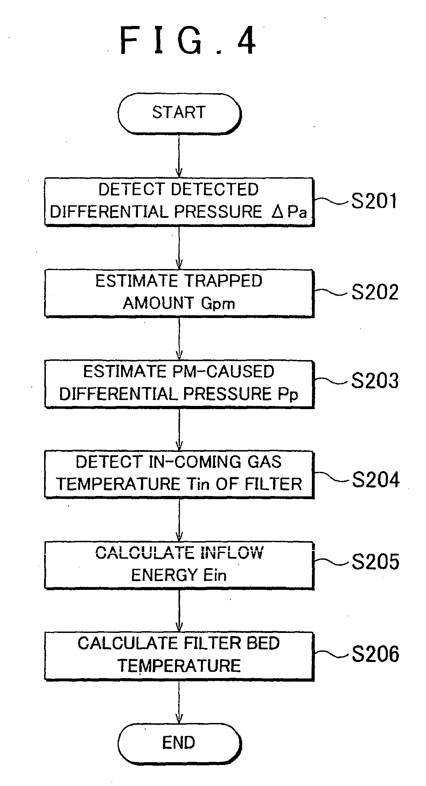

Next, a process flow of calculating the bed temperature of the filter 10 according to this embodiment will be described. FIG. 4 is a flowchart showing a process flow of calculating the bed temperature of the filter 10 according to this embodiment. This routine is executed repeatedly at every predetermined time. Incidentally, while PM has not deposited on the filter 10 (e.g., while the filter 10 is brand new), the differential pressure detected by the differential pressure sensor 11 is stored in the ECU 20 beforehand. The pre-found differential pressure is hereinafter termed "reference differential pressure ΔPb".

In step S201, the differential pressure between the upstream side and the downstream side of the filter 10 is detected via the differential pressure sensor 11. The differential pressure includes the differential pressure that occurs in accordance with the amount of exhaust gas that passes through the flirter 10, and the differential pressure that occurs in accordance with the amount of PM deposit on the filter 10. The differential pressure detected in this step is hereinafter referred to as "detected differential pressure ΔPa".

In step S202, the degree of clogging of the filter 10 is estimated. As the degree of clogging of the filter 10, the amount of PM Gpm trapped on the filter 10 (hereinafter, referred to as "trapped amount Gpm") can be directly used.

The trapped amount Gpm, which will be described later in detail, may be found as follows. That is, the trapped amount Gpm can be found by finding the Trapped PM amounts corresponding to the state of operation of the internal combustion engine 1 (the exhaust gas temperature, the amount of fuel injection, the engine rotation speed, etc.) through experiments or the like and representing them in the form of a map and integrating Trapped PM amounts obtained from this map. Furthermore, the trapped amount Gpm may be estimated in accordance with the vehicle travel distance or the travel time. In this embodiment, the ECU 20 executing the process of step S202 corresponds to clogging estimation means in the invention.

In step S203, the amount of differential pressure that is caused by the trapped amount Gpm is estimated. A relationship between the trapped amount Gpm and the thereby caused amount of differential pressure is found through experiments or the like, and is represented in a map beforehand.

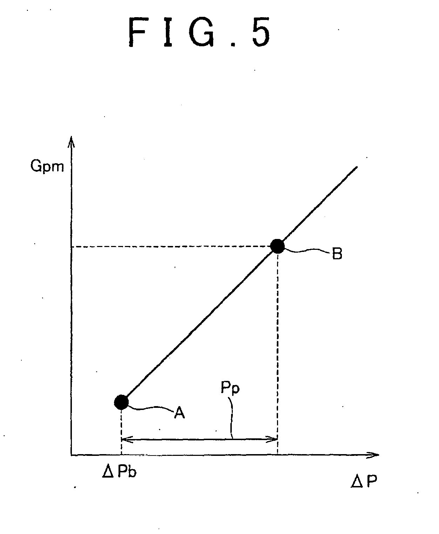

FIG. 5 is a diagram showing a relationship between the differential pressure ΔP and the trapped amount Gpm. In FIG. 5, the point indicated by "A" represents a state where the trapped amount Gpm being 0 or a state immediately following the regeneration process of the filter 10, and may be considered to be a state occurring, for example, when the filter 10 is in a brand new state. At this point A, the differential pressure ΔP is the reference differential pressure ΔPb. By substituting the trapped amount Gpm estimated in step S202 in the diagram of FIG. 5, a point indicated by "B" is obtained. The differential pressure corresponding to the point B is found from the diagram of FIG 5. The value obtained by subtracting the differential pressure of the point A from the differential pressure of the point B represents the amount of differential pressure Pp that is an increase caused in accordance with the trapped amount Gpm obtained in step S202 (hereinafter, referred to as "PM-caused differential pressure Pp").

Furthermore, the differential pressure corresponding only to the amount of exhaust gas can be found by subtracting the PM-caused differential pressure Pp from the detected differential pressure ΔPa. In this embodiment, the ECU 20 executing the process of step S203 corresponds to clog-caused differential pressure estimation means in the invention.

In step S204, the in-coming gas temperature Tin of the filter 10 is detected. The in-coming gas temperature Tin of the filter 10 is the temperature of the exhaust gas that flows into the filter 10, and can be obtained via the exhaust gas temperature sensor 12.

In step S205, the energy Ein that flows into the filter 10 is calculated. This value of energy Ein is used to find the temperature rise value of the filter 10. The inflow energy Ein can be found using the following equation: Ein=f(ΔPa-Pp)×R×Tin where R is a gas constant of exhaust gas. Furthermore, f(ΔPa-Pp) converts the differential pressure that corresponds only to exhaust gas into a mass flow amount. In this embodiment, the ECU 20 executing the process of f(ΔPa-Pp) corresponds to filter-passing gas amount detection means in the invention.

In step S206, the bed temperature of the filter 10 is calculated. Herein, the temperature rise value dT of the filter 10 can be found as a value obtained by dividing the energy given to the filter 10 by the specific heat κ of the filter 10 and the mass M of the filter 10.

That is, the inflow energy Ein can be found using the following equation:

$$dT = Ein/(\kappa \cdot M)$$

In this manner, on the basis of the temperature of the exhaust gas that flows into the filter 10 at the present time, the temperature rise value dT of the filter 10 can be found. Therefore, by adding the temperature rise value dT to the present-time temperature of the filter 10, the temperature of the filter 10 can be estimated. In this embodiment, the ECU 20 executing the processes of step S205 and step S206 corresponds to filter temperature estimation means in the invention.

Now, a technique of finding the degree of clogging of the filter 10 will be described. To find the degree of clogging, the low-pressure EGR valve 32 is fixed in a fully closed state. When the low-pressure EGR valve 32 is fixed in the fully closed state in this manner, the amount of exhaust gas that passes through the filter 10 can easily be estimated on the basis of the intake air amount detected by the air flow meter 7. This makes it possible to easily find the degree of clogging.

In this description, it is assumed that the cross-sectional area of the exhaust pipe 4 immediately upstream of the filter 10 is A0, and the flow velocity of exhaust gas is U0. Furthermore, the PM clogging in the filter 10 is regarded as a constriction, and the cross-sectional area is and the flow velocity of exhaust gas at the filter 10 is Ucat.

By fitting the aforementioned relationship to the Bernoulli theorem, the following equation can be obtained:
[Mathematical Expression 1]

Equation 1

$$\rho\, U_0^2/2 + P_0 = \rho\, U_{cat}^2/2 + P_1$$

where P0 is pressure of exhaust gas immediately upstream of the filter 10, and P1 is the pressure of exhaust gas immediately downstream of the filter 10. The fluid density is assumed to be constant. Since the following equation:
[Mathematical Expression 2]

Equation 2

$$U_0 A_0 = U_{cat} A_1$$

is satisfied, the differential pressure ∆P between the upstream side and the downstream side of the filter 10 becomes as follows.
[Mathematical Expression 3]

Equation 3

$$\Delta P = (P_0 - P_1)$$
$$= \rho\, U_{cat}^2/2 - \rho\, U_0^2/2$$
$$= \rho\, U_{cat}^2/2 - \rho\, U_{cat}^2(A_1/A_0)^2/2$$

Then, Equation 3 can be rewritten into the between equation:
[Mathematical Expression 4]

$$\Delta P/U_{cat}^2 = \rho\,(1-(A_1/A_0)^2)/2$$

In the equation, $\Delta P/U_{cat}^2$ represents the cross-sectional area A1 that corresponds to the clogging of the filter 10.

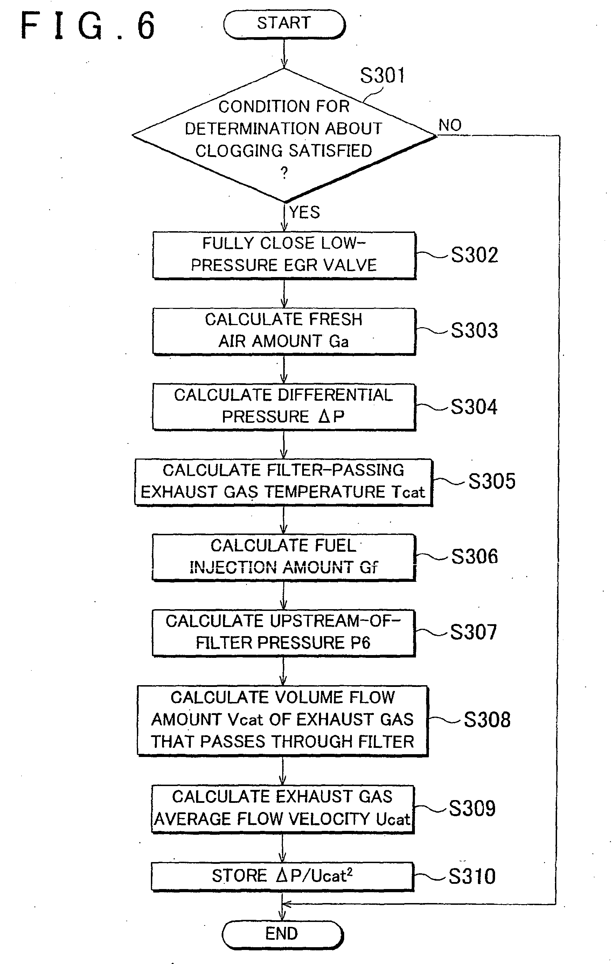

Next, a process flow of finding the degree of clogging of the filter 10 according to this embodiment will be described. FIG. 6 is a flowchart showing a process flow of finding the degree of clogging of the filter 10 according to this embodiment. This routine is executed repeatedly at every predetermined time.

In step S301, it is determined whether or not a condition for performing determination regarding clogging of the filter 10 is satisfied. In this step, it is determined whether or not the present state is suitable for performing the determination regarding the clogging of the filter 10. For example, it is determined whether or not the internal combustion engine 1 is in a steady state, and whether or not the temperature of the filter 10 is within a predetermined range. It may also be determined whether or not the vehicle has traveled a predetermined distance such that PM can deposit in large amount. If an affirmative determination is made in step S301, the process proceeds to step S302. On the other hand, if a negative determination is made in step S301, the present execution of the routine is ended.

In step S302, the low-pressure EGR valve 32 is fully closed. That is, the exhaust gas that passes through the filter 10 is caused to contain no low-pressure EGR gas. This facilitates calculation of the flow amount of exhaust gas that passes through the filter 10.

In step S303, the fresh air amount Ga is calculated. The fresh air amount Ga can be obtained via the air flow meter 7.

In step S304, the differential pressure $\Delta P$ between the upstream side and the downstream side of the filter 10 is calculated. The differential pressure $\Delta P$ between the upstream side and the downstream side of the filter 10 can be obtained via the differential pressure sensor 11.

In step S305, the temperature of the exhaust gas that passes through the filter 10 (hereinafter, referred to as "filter-passing exhaust gas temperature") Teat is calculated. The filter-passing exhaust gas temperature Tcat can be obtained via the exhaust gas temperature sensor 12. This filter-passing exhaust gas temperature is used to convert the mass flow amount of exhaust gas that passes through the filter 10 into a volume flow amount.

In step S306, the fuel injection amount Gf is calculated. The fuel injection amount Gf is the amount of fuel injected into the cylinders 2, and is a value that the ECU 20 calculates on the basis of the engine rotation speed, the engine load, etc.

In step S307, the pressure in the exhaust pipe 4 upstream of the filter 10 (hereinafter, referred to as "upstream-of-filter pressure") is calculated. The upstream-of-filter pressure P6 can be obtained by disposing a sensor that detects the pressure of exhaust gas in the exhaust pipe 4 between upstream of the filter 10 and downstream of the turbine housing 5b.

In step S308, the volume flow amount Vcat of exhaust gas that flows through the filter 10 is calculated. The volume flow amount Vcat can be obtained using the following equation on the basis of the equation of state.

### Equation 5

$$V_{cat} = (G_a + G_f) \cdot R \cdot T_{cat} / P_6$$

In step S309, an average flow velocity of the exhaust gas that flows through the filter 10 (hereinafter, referred to as "exhaust average flow velocity") Ucat is calculated. The exhaust average flow velocity Ucat can be found by dividing the volume flow amount Vcat calculated in step S308 by the cross-sectional area A of the filter 10. The cross-sectional area A of the filter 10 is found beforehand.

In step 5310, $\Delta P/Ucat_2$ is stored as a degree of clogging of the filter 10.

In this manner, the degree of clogging of the filter 10 can be found. Then, if a relationship between the differential pressure $\Delta P$ and the degree of clogging is represented in a map similarly to FIG. 5, the PM-caused differential pressure P1 can be found. Also, an equation for converting the degree of clogging into the trapped amount Gpm may be found beforehand, so that a trapped amount Gpm can be found from the degree of clogging, and the value of the trapped amount Gpm can be substituted in the map of FIG. 5 to find the PM-caused differential pressure P1.

In this embodiment, when the determination regarding the clogging of the filter 10 is performed, the low-pressure EGR valve 32 is fully closed. However, the low-pressure EGR valve 32 may instead be fixed at a predetermined degree of opening other than the fully closed state. In this case, the amount of low-pressure EGR gas that flows in the low-pressure EGR passage 31 is directly measured or is estimated. Then, by joining the amount of low-pressure EGR gas and the fresh air amount detected by the air flow meter 7, the flow amount of exhaust gas that passes through the filter 10 is calculated.

As described above, according to the embodiment, the amount of exhaust gas that passes through the filter 10 can be more accurately found by excluding, from the differential pressure between the upstream side and the downstream side of the filter 10, the amount of differential pressure corresponding to the effect of the PM trapped on the filter 10. Thus, the bed temperature of the filter 10 can be accurately found, so that it becomes easy to control the temperature of the filter 10 at the times of performing the regeneration of the filter 10, the removal of NOx, and the sulfur poisoning recovery. Therefore, these controls can be efficiently performed.

EMBODIMENT 3

In Embodiment 3, the temperature of the filter 10 is estimated by finding the amount of exhaust gas that passes through the filter 10 on the basis of the air-fuel ratio of intake air that flows in the intake pipe 3 downstream of the site of connection with the low-pressure EGR passage 31, and the fresh air amount that passes through the air flow meter 7.

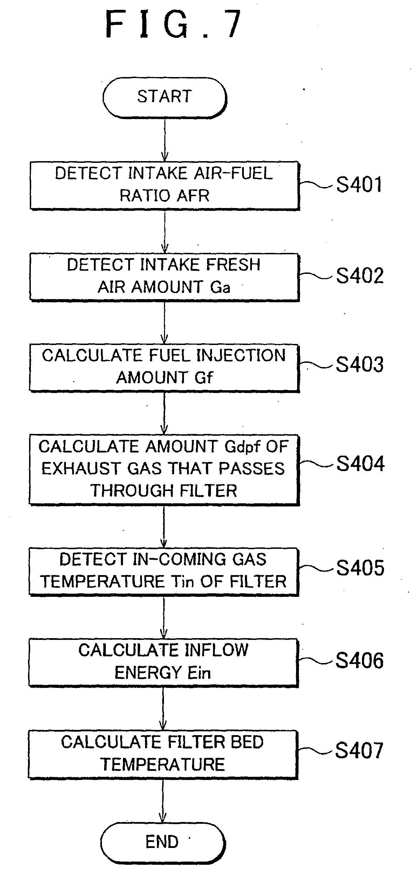

FIG. 7 is a flowchart showing a process flow of calculating the bed temperature of the filter 10 according to this embodiment. This routine is executed repeatedly at every predetermined time.

In step 5401, an intake air-fuel ratio AFR is detected. The intake air-fuel ratio AFR is detected by the intake air-fuel ratio sensor 13.

In step S402, the fresh air amount Ga taken into the internal combustion engine 1 is detected. The fresh air amount Ga can be obtained via the air flow meter 7. The amount of gas taken into the cylinders 2 is the value of the fresh air amount Ga and the low-pressure EGR gas amount combined.

In step S403, a fuel injection amount Gf is calculated. The fuel injection amount Gf is the amount of fuel injected into the cylinders 2, and is a value that the ECU 20 calculates on the basis of the engine rotation speed, the engine load, etc.

In step S404, the amount Gdpf of exhaust gas that passes through the filter 10 is calculated. The amount Gdpf of exhaust gas that passes through the filter 10 can be found as a sum of the fresh air amount Ga calculated in step S402, the fuel injection amount Gf calculated in step S403, and the low-pressure EGR gas amount Gegr.

It is to be noted herein that since the low-pressure EGR gas amount Gegr can be found by dividing the fresh air amount Ga by the intake air-fuel ratio AFR, the amount Gdpf of exhaust gas that passes through the filter 10 can be found using the following equation: Gdpf=Ga+Gf+Ga/AFR

In this embodiment, the ECU 20 executing the process of step S404 corresponds to filter-passing gas amount detection means in the invention.

In step S405, the in-coming gas temperature Tin of the filter 10 is detected. The in-coming gas temperature Tin of the filter 10 is the temperature of the exhaust gas that flows into the filter 10, and can be obtained via the exhaust gas temperature sensor 12.

In step S406, the energy Ein that flows into the filter 10 is calculated. The value of the energy Ein is used to find the temperature rise value of the filter 10. The inflow energy Ein can be obtained using the following equation: Ein=GdpfxRxTin where R is the gas constant of exhaust gas.

In step S407, the bed temperature of the filter 10 is calculated. Herein, the temperature rise value dT of the filter 10 can be found as a value obtained by dividing the energy given to the filter 10 by the specific heat $\kappa$ of the filter 10 and the mass M of the filter 10.

That is, the inflow energy Ein can be found using the following equation:

$$dT=Ein/(\kappa \cdot M)$$

In this manner, on the basis of the temperature of the exhaust gas that flows into the filter 10 at the present time, the temperature rise value dT of the filter 10 can be found. Therefore, by adding the temperature rise value dT to the present-time temperature of the filter 10, the temperature of the filter 10 can be estimated. In this embodiment, the ECU 20 executing the processes of step S406 and step S407 corresponds to filter temperature estimation means in the invention.

As described above, according to this embodiment, the use of the intake fresh air amount Ga and the intake air-fuel ratio AFR makes it possible to more accurately find the low-pressure EGR gas amount. Due to this, the amount of exhaust gas that passes through the filter 10 can be more accurately found, so that the bed temperature of the filter 10 can be more accurately found. Therefore, it becomes easy to control the temperature of the filter 10 at the times of performing the regeneration of the filter 10, the removal of NOx, and the sulfur poisoning recovery. Thus, these controls can be efficiently performed.

The exhaust purification device of the internal combustion engine in each one of the foregoing embodiments can find the temperature of the particulate filter with improved accuracy. Therefore, it becomes easy to control the temperature of the particulate filter.

**Claims**

1. An exhaust purification device of an internal combustion engine including :

    a particulate filter (10) that is provided in an exhaust passage (4) and that traps a particulate matter in exhaust gas;

an EGR passage (31) through which a portion of the exhaust gas that flows in the exhaust passage (4) is recirculated to an intake passage (3);
filter-passing gas amount detection means (20) for detecting an amount of exhaust gas that passes through the particulate filter (10);
and
filter temperature estimation means (20) for estimating a temperature of the particulate filter (10) by estimating an amount of heat that exhaust gas gives to the particulate filter (10) based on the amount of exhaust gas detected by the filter-passing gas amount detection means (20) and the temperature of exhaust gas detected by an exhaust gas temperature detection means (12), **characterized in that** said exhaust gas temperature detection means (12) are for detecting a temperature of exhaust gas that flows into the particulate filter (10); and **in that** the filter-passing gas amount detection means detects an amount of exhaust gas that passes through the particulate filter (10) based on a differential pressure between an upstream side and a downstream side of the particulate filter (10) or the amount of exhaust gas that passes in said EGR passage (31).

2. The exhaust purification device according to claim 1, further comprising:

intake air amount detection means (7) for detecting an amount of fresh air that flows in the intake passage (3);
an EGR passage (31) that connects the exhaust passage (4) downstream of the particulate filter (10) and the intake passage (3) downstream of the intake air amount detection means (7) and that recirculates a portion of the exhaust gas that flows in the exhaust passage (4) to the intake passage (3); and
EGR gas amount estimation means (20) for estimating an amount of exhaust gas that flows in the EGR passage (31),

wherein the filter-passing gas amount detection means (20) detects the amount of exhaust gas that passes through the particulate filter (10) based on the amount of exhaust gas estimated by the EGR gas amount estimation means (20) and the amount of fresh air detected by the intake air amount detection means (7).

3. The exhaust purification device according to claim 2, further comprising:

intake air pressure detection means (17) for detecting a pressure in the intake passage (3) at a downstream side of a site to which the EGR passage (31) is connected,

wherein the EGR gas amount estimation means (20) stores a relationship between the amount of fresh air detected by the intake air amount detection means (7) and the pressure detected by the intake air pressure detection means (17) and the amount of exhaust gas that flows in the EGR passage (31), and estimates the amount of exhaust gas that flows in the EGR passage (31) from the relationship.

4. The exhaust purification device according to claim 2 or 3, wherein the filter-passing gas amount detection means (20) detects the amount of exhaust gas that passes through the particulate filter (10) from a sum of the amount of fresh air detected by the intake air amount detection means (7), the amount of exhaust gas estimated by the EGR gas amount estimation means (20), and an amount of fuel supplied to a cylinder of the internal combustion engine.

5. The exhaust purification device according to claim 1, further comprising:

differential pressure detection means (11) for detecting the differential pressure between the upstream side and the downstream side of the particulate filter (10);
clogging estimation means (20) for estimating a degree of clogging of the particulate filter (10); and
clog-caused differential pressure estimation means (20) for estimating a clog-caused differential pressure which is a differential pressure caused by clogging of the particulate filter (10) among the differential pressure detected by the differential pressure detection means (11), based on the degree of clogging of the particulate filter (10) estimated by the clogging estimation means (20),

wherein the filter-passing gas amount detection means (20) detects the amount of exhaust gas that passes through the particulate filter (10), based on a value obtained by subtracting the differential pressure estimated by the clog-caused differential pressure estimation means (20) from the differential pressure detected by the differential pressure detection means (11).

6. The exhaust purification device according to claim 5, further comprising:

an EGR valve (32) that adjusts a passage cross-sectional area of the EGR passage (31),

wherein the clogging estimation means (20) estimates the degree of clogging of the particulate filter (10) when the EGR valve (32) is fixed in a fully closed state.

7. The exhaust purification device according to claim 1, further comprising:

intake air amount detection means (7) for detecting an amount of fresh air that flows in the intake passage (3);
an EGR passage (31) that connects the exhaust passage (4) downstream of the particulate filter (10) and the intake passage (3) downstream of the intake air amount detection means (7) and that recirculates a portion of the exhaust gas that flows in the exhaust passage (4) to the intake passage (3); and
intake air-fuel ratio detection means (13) for detecting an air-fuel ratio in the intake passage (3) at a downstream side of a site to which the EGR passage (31) is connected,

wherein the filter-passing gas amount detection means (20) detects the amount of exhaust gas that passes through the particulate filter (10) based on the amount of fresh air detected by the intake air amount detection means (7), an amount of fuel supplied to the internal combustion engine, and the air-fuel ratio detected by the intake air-fuel ratio detection means (13).

8. The exhaust purification device according to claim 7, wherein the filter-passing gas amount detection means (20) detects the amount of exhaust gas that passes through the particulate filter (10) from a sum of the amount of fresh air detected by the intake air amount detection means (7), the amount of fuel supplied to the internal combustion engine, and a value obtained by dividing the amount of fresh air detected by the intake air amount detection means (7) by the air-fuel ratio detected by the intake air-fuel ratio detection means (13).

9. The exhaust purification device according to any one of claims 1 to 8, wherein the filter temperature estimation means (20) estimates an amount of heat that exhaust gas gives to the particulate filter (10) from an inflow energy calculated from a multiplication product of the amount of exhaust gas that passes through the particulate filter (10) and the temperature of exhaust gas that flows into the particulate filter (10).

10. The exhaust purification device according to claim 9, wherein the filter temperature estimation means (20) estimates the temperature of the particulate filter (10) by adding a temperature rise value of the particulate filter (10) found as a value obtained by dividing the inflow energy by a specific heat of the particulate filter (10) and a mass of the particulate filter (10) to the temperature of the particulate filter (10) occurring at a present time.

11. An exhaust purification method of an internal combustion engine comprising the steps of:

detecting an amount of exhaust gas that passes through a particulate filter (10) based on an amount of exhaust gas that flows in an EGR passage (31) that recirculates a portion of the exhaust gas that flows in an exhaust passage (4) to an intake passage (3) or based on a differential pressure between an upstream side and a downstream side of the particulate filter (10);
detecting a temperature of exhaust gas that flows into the particulate filter (10); and
estimating a temperature of the particulate filter (10) by estimating an amount of heat that exhaust gas gives to the particulate filter (10) based on the detected amount of exhaust gas that passes through the particulate filter (10) and the detected temperature of exhaust gas.

12. The exhaust purification method according to claim 11 further comprising the steps of:

detecting an amount of fresh air that flows in the intake passage (3); and
estimating the amount of exhaust gas that flows in the EGR passage (31) that connects the exhaust passage (4) downstream of the particulate filter (10) and the intake passage (3) downstream of intake air amount detection means (7) and that recirculates a portion of the exhaust gas that flows in the exhaust passage (4) to the intake passage (3),

wherein the amount of exhaust gas that passes through the particulate filter (10) is detected based on the estimated amount of exhaust gas and the detected amount of fresh air.

13. The exhaust purification method according to claim 12 further comprising the step of:

detecting a pressure in the intake passage (3) downstream of a site to which the EGR passage (31) is connected,

wherein the amount of exhaust gas that flows in the EGR passage (31) is estimated from a relationship among the detected amount of fresh air, the detected pressure in the intake passage (3), and the amount of exhaust gas that flows in the EGR passage (31).

**14.** The exhaust purification method according to claim 12 or 13, wherein the amount of exhaust gas that passes through the particulate filter (10) is detected form a sum of the detected amount of fresh air, the estimated amount of exhaust gas, and an amount of fuel supplied to a cylinder of the internal combustion engine.

**15.** The exhaust purification method according to claim 11 further comprising the steps of:

detecting the differential pressure between the upstream side and the downstream side of the particulate filter (10);
estimating a degree of clogging of the particulate filter (10); and
estimating a clog-caused differential pressure which is a differential pressure caused by clogging of the particulate filter (10) among the detected differential pressure, based on the estimated degree of clogging of the particulate filter (10),

wherein the amount of exhaust gas that passes through the particulate filter (10) is detected based on a value obtained by subtracting the estimated differential pressure from the detected differential pressure.

**16.** The exhaust purification method according to claim 15, wherein the degree of clogging of the particulate filter (10) is estimated when an EGR valve (32) that adjusts a passage cross-sectional area of the EGR passage (31) that recirculates a portion of the exhaust gas that flows in the exhaust passage (4) to the intake passage (3) is fixed in a fully closed state.

**17.** The exhaust purification method according to claim 11, further comprising the steps of:

detecting an amount of fresh air that flows in the intake passage (3); and
detecting an air-fuel ratio in the intake passage (3) downstream of a site of connection with the EGR passage (31) which connects the exhaust passage (4) downstream of the particulate filter (10) and the intake passage (3) downstream of intake air amount detection means (7) for detecting the amount of fresh air that flows in the intake passage (3) and which recirculates a portion of the exhaust gas that flows in the exhaust passage (4) to the intake passage (3),

wherein the amount of exhaust gas that passes through the particulate filter (10) is detected based on the detected amount of fresh air, an amount of fuel supplied to the internal combustion engine, and the detected air-fuel ratio.

**18.** The exhaust purification method according to claim 17, wherein the amount of exhaust gas that passes through the particulate filter (10) is detected from a sum of the detected amount of fresh air, the amount of fuel supplied to the internal combustion engine, and a value obtained by dividing the detected amount of fresh air by the detected air-fuel ratio.

**19.** The exhaust purification method according to any one of claims 11 to 18, wherein an amount of heat that exhaust gas gives to the particulate filter (10) is estimated from an inflow energy calculated from a multiplication product of the amount of exhaust gas that passes through the particulate filter (10) and the temperature of exhaust gas that flows into the particulate filter (10).

**20.** The exhaust purification method according to claim 19, wherein the temperature of the particulate filter (10) is estimated by adding a temperature rise value of the particulate filter (10) found as a value obtained by dividing the inflow energy by a specific heat of the particulate filter (10) and a mass of the particulate filter (10) to the temperature of the particulate filter (10) occurring at a present time.

**Patentansprüche**

**1.** Abgasreinigungsvorrichtung eines Verbrennungsmotors, mit:

einem Partikelfilter (10), der in einem Auslasskanal (4) angeordnet ist und der Aerosole in einem Abgas zurückhält;

einer AGR-Durchführung (31), durch die ein Teil des Abgases, das in dem Auslasskanal (4) strömt, zu einem Ansaugkanal (3) rückgeführt wird;

einem Filterdurchtrittsgasmengen-Erfassungsmittel (20) zum Erfassen einer Abgasmenge, die durch das Partikelfilter (10) hindurchtritt;
und

einem Filtertemperatur-Schätzmittel (20) zum Schätzen einer Temperatur des Partikelfilters (10) durch Schätzen einer Wärmemenge, die das Abgas auf das Partikelfilter überträgt, auf der Grundlage der durch das Filterdurchtrittsgasmengen-Erfassungsmittel (20) erfassten Abgasmenge und der durch ein Abgastemperatur-Erfassungsmittel (12) erfassten Temperatur, **dadurch gekennzeichnet, dass** das Abgastemperatur-Erfassungsmittel (12) der Erfassung einer Temperatur des Abgases dient, das in den Partikelfilter (10) strömt; und

dass das Filterdurchtrittsgasmengen-Erfassungsmittel eine Abgasmenge, die durch das Partikelfilter (10) hindurchtritt, auf der Grundlage eines Differenzdrucks zwischen einer strömungsaufwärts gelegenen Seite und einer strömungsabwärts gelegenen Seite des Partikelfilters (10) oder der Abgasmenge, die durch die AGR-Durchführung (31) hindurchtritt, erfasst.

2. Abgasreinigungsvorrichtung nach Anspruch 1, die ferner umfasst:

ein Ansaugluftmengen-Erfassungsmittel (7) zum Erfassen einer Frischluftmenge, die in dem Ansaugkanal (3) strömt;

eine AGR-Durchführung (31), die den Auslasskanal (4) strömungsabwärts des Partikelfilters (10) und den Ansaugkanal (3) strömungsabwärts des Ansaugluftmengen-Erfassungsmittels (7) verbindet und die einen Teil des Abgases, das in dem Auslasskanal (4) fließt, zu dem Ansaugkanal (3) rückführt; und

ein AGR-Gasmengen-Schätzmittel (20) zum Schätzen einer Abgasmenge, die in der AGR-Durchführung (31) strömt,

wobei das Filterdurchtrittsgasmengen-Erfassungsmittel (20) die Abgasmenge, die durch das Partikelfilter (10) hindurchtritt, auf der Grundlage der durch das AGR-Gasmengen-Schätzmittel (20) geschätzten Abgasmenge und der durch das Ansaugluftmengen-Erfassungsmittel (7) erfassten Frischluftmenge erfasst.

3. Abgasreinigungsvorrichtung nach Anspruch 2, die ferner umfasst:

ein Ansaugluftdruck-Erfassungsmittel (17) zum Erfassen eines Drucks in dem Ansaugkanal (3) auf einer strömungsabwärts gelegenen Seite einer Stelle, mit der die AGR-Durchführung (31) verbunden ist,

wobei das AGR-Gasmengen-Schätzmittel (20) eine Beziehung zwischen der durch das Ansaugluftmengen-Erfassungsmittel (7) erfassten Frischluftmenge und des durch das Ansaugluftdruck-Erfassungsmittel (17) erfassten Drucks und der Abgasmenge, die in der AGR-Durchführung (31) strömt, speichert und die Abgasmenge, die in der AGR-Durchführung (31) strömt, aus der Beziehung schätzt.

4. Abgasreinigungsvorrichtung nach Anspruch 2 oder 3, wobei das Filterdurchtrittsgasmengen-Erfassungsmittel (20) die Abgasmenge, die durch das Partikelfilter (10) hindurchtritt, aus einer Summe aus der durch das Ansaugluftmengen-Erfassungsmittel (7) erfassten Frischluftmenge, der durch das AGR-Gasmengen-Schätzmittel (20) geschätzten Abgasmenge und einer Kraftstoffmenge, die einem Zylinder des Verbrennungsmotors zugeführt wird, erfasst.

5. Abgasreinigungsvorrichtung nach Anspruch 1, die ferner umfasst:

ein Differenzdruckerfassungsmittel (11) zum Erfassen des Differenzdrucks zwischen der strömungsaufwärts gelegenen Seite und der strömungsabwärts gelegenen Seite des Partikelfilters (10);

ein Verstopfungs-Schätzmittel (20) zum Schätzen eines Verstopfungsgrades des Partikelfilters (10); und

ein Mittel (20) zum Schätzen eines durch eine Verstopfung bewirkten Differenzdrucks zum Schätzen eines durch eine Verstopfung bewirkten Differenzdrucks, der ein durch Verstopfen des Partikelfilters (10) bewirkter Differenzdruck von dem durch das Differenzdruck-Erfassungsmittel (10) erfassten Differenzdruck ist, auf der Grundlage des durch das Verstopfungs-Schätzmittel (20) geschätzten Verstopfungsgrades des Partikelfilters (10);

wobei das Filterdurchtrittsgasmengen-Erfassungsmittel (20) die Abgasmenge, die durch das Partikelfilter (10) hindurchtritt, auf der Grundlage eines Wertes erfasst, der durch Subtrahieren des durch das Mittel (20) zum Schätzen eines durch eine Verstopfung bewirkten Differenzdrucks geschätzten Differenzdrucks von dem durch das Differenzdruck-Erfassungsmittel (11) erfassten Differenzdruck gewonnen wird.

6. Abgasreinigungsvorrichtung nach Anspruch 5, die ferner umfasst:

   ein AGR-Ventil (32), das eine Durchführungsquerschnittsfläche der AGR-Durchführung (31) einstellt;

   wobei das Verstopfungs-Schätzmittel (20) den Verstopfungsgrad des Partikelfilters (10) schätzt, wenn das AGR-Ventil (32) in einem vollständig geschlossenen Zustand festgelegt ist.

7. Abgasreinigungsvorrichtung nach Anspruch 1, die ferner umfasst:

   ein Ansaugluftmengen-Erfassungsmittel (7) zum Erfassen einer Frischluftmenge, die in dem Ansaugkanal (3) strömt;
   eine AGR-Durchführung (31), die den Auslasskanal (4) strömungsabwärts des Partikelfilters (10) und den Ansaugkanal (3) strömungsabwärts des Ansaugluftmengen-Erfassungsmittels (7) verbindet, und die einen Teil des Abgases, das in dem Auslasskanal (4) strömt, zu dem Ansaugkanal (3) rückführt; und
   ein Ansaugluft-Kraftstoff-Verhältnis-Erfassungsmittel (13) zum Erfassen eines Luft-Kraftstoff-Verhältnisses in dem Ansaugkanal (3) an einer strömungsabwärts gelegenen Seite einer Stelle, mit der die AGR-Durchführung (31) verbunden ist,

   wobei das Filterdurchtrittsgasmengen-Erfassungsmittel (20) die Abgasmenge, die durch das Partikelfilter (10) hindurchtritt, auf der Grundlage der durch das Ansaugluftmengen-Erfassungsmittel (7) erfassten Frischluftmenge, einer dem Verbrennungsmotor zugeführten Kraftstoffmenge und dem durch das Ansaugluft-Kraftstoff-Verhältnis-Erfassungsmittel (13) erfassten Luft-Kraftstoff-Verhältnis erfasst.

8. Abgasreinigungsvorrichtung nach Anspruch 7, wobei das Filterdurchtrittsgasmengen-Erfassungsmittel (20) die Abgasmenge, die durch das Partikelfilter (10) hindurchtritt, aus einer Summe aus der durch das Ansaugluftmengen-Erfassungsmittel (10) erfassten Frischluftmenge, der dem Verbrennungsmotor zugeführten Kraftstoffmenge und einem Wert, der durch Dividieren der durch das Ansaugluftmengen-Erfassungsmittel (7) erfassten Frischluftmenge durch das durch das Ansaugluft-Kraftstoff-Verhältnis-Erfassungsmittel (13) erfassten Luft-Kraftstoff-Verhältnis gewonnen wird, erfasst.

9. Abgasreinigungsvorrichtung nach einem der Ansprüche 1 bis 8, wobei das Filtertemperatur-Schätzmittel (20) eine Wärmemenge, die das Abgas auf das Partikelfilter (10) überträgt, aus einer aus einem Multiplikationsprodukt der Abgasmenge, die durch das Partikelfilter (10) hindurchtritt, und der Temperatur des Abgases, das in das Partikelfilter (10) strömt, berechneten Einströmenergie schätzt.

10. Abgasreinigungsvorrichtung nach Anspruch 9, wobei das Filtertemperatur-Schätzmittel (20) die Temperatur des Partikelfilters (10) durch Addieren eines Temperaturanstiegwertes des Partikelfilters (10), der als Wert gefunden wird, der durch Dividieren der Einströmenergie durch eine spezifische Wärme des Partikelfilters (10) und einer Masse des Parikelfilters (10) gewonnen wird, zu der zu einem momentanen Zeitpunkt existierenden Temperatur des Partikelfilters (10) schätzt.

11. Abgasreinigungsverfahren eines Verbrennungsmotors, das die Schritte umfasst:

    Erfassen einer Abgasmenge, die durch ein Partikelfilter (10) hindurchtritt, auf der Grundlage einer Abgasmenge, die in einer AGR-Durchführung (31) strömt, die einen Teil des Abgases, das in einem Auslasskanal (4) strömt, zu einem Ansaugkanal (3) rückführt, oder auf der Grundlage eines Differenzdrucks zwischen einer strömungsaufwärts gelegenen Seite und einer strömungsabwärts gelegenen Seite des Partikelfilters (10);
    Erfassen einer Temperatur des Abgases, das in das Partikelfilter (10) strömt; und
    Schätzen einer Temperatur des Partikelfilters (10) durch Schätzen einer Wärmemenge, die das Abgas auf das Partikelfilter (10) überträgt, auf der Grundlage der erfassten Abgasmenge, die durch das Partikelfilter (10) hindurchtritt, und der erfassten Temperatur des Abgases.

12. Abgasreinigungsverfahren nach Anspruch 11, das ferner die Schritte umfasst:

Erfassen einer Frischluftmenge, die in dem Ansaugkanal (3) strömt; und

Schätzen der Abgasmenge, die in der AGR-Durchführung (31) strömt, die den Auslasskanal (4) strömungsabwärts des Partikelfilters (10) und den Ansaugkanal (3) strömungsabwärts von einem Ansaugluftmengen-Erfassungsmittel (7) verbindet, und die einen Teil des Abgases, das in dem Auslasskanal (4) strömt, zu dem Ansaugkanal (3) rückführt,

wobei die Abgasmenge, die durch das Partikelfilter (10) hindurchtritt, auf der Grundlage der geschätzten Abgasmenge und der erfassten Frischluftmenge erfasst wird.

13. Abgasreinigungsverfahren nach Anspruch 12, das ferner den Schritt umfasst:

Erfassen eines Drucks in dem Ansaugkanal (3) strömungsabwärts einer Stelle, mit der die AGR-Durchführung (31) verbunden ist,

wobei die Abgasmenge, die in der AGR-Durchführung (31) strömt, aus einer Beziehung zwischen der erfassten Frischluftmenge, dem erfassten Druck in dem Ansaugkanal (3) und der Abgasmenge, die in der AGR-Durchführung (31) strömt, geschätzt wird.

14. Abgasreinigungsverfahren nach Anspruch 12 oder 13, wobei die Abgasmenge, die durch das Partikelfilter (10) hindurchtritt, aus einer Summe aus der erfassten Frischluftmenge, der geschätzten Abgasmenge und einer einem Zylinder des Verbrennungsmotors zugeführten Kraftstoffmenge erfasst wird.

15. Abgasreinigungsverfahren nach Anspruch 11, das ferner die Schritte umfasst:

Erfassen des Differenzdrucks zwischen der strömungsaufwärts gelegenen Seite und der strömungsabwärts gelegenen Seite des Partikelfilters (10);

Schätzen eines Verstopfungsgrades des Partikelfilters (10); und

Schätzen eines durch Verstopfung bewirkten Differenzdrucks, der ein Differenzdruck ist, der durch Verstopfen des Partikelfilters (10) bewirkt wird, von dem erfassten Differenzdruck, auf der Grundlage des geschätzten Verstopfungsgrades des Partikelfilters (10),

wobei die Abgasmenge, die durch das Partikelfilter (10) hindurchtritt, auf der Grundlage eines Wertes erfasst wird, der durch Subtrahieren des geschätzten Differenzdrucks von dem erfassten Differenzdruck gewonnen wird.

16. Abgasreinigungsverfahren nach Anspruch 15, wobei der Verstopfungsgrad des Partikelfilters (10) geschätzt wird, wenn ein AGR-Ventil (32), das eine Durchführungsquerschnittsfläche der AGR-Durchführung (31), die einen Teil des Abgases, das in dem Auslasskanal (4) strömt, zu dem Einlasskanal (3) rückführt, einstellt, in einem vollständig geschlossenen Zustand festgelegt ist.

17. Abgasreinigungsverfahren nach Anspruch 11, das ferner die Schritte umfasst:

Erfassen einer Frischluftmenge, die in dem Ansaugkanal (3) strömt; und

Erfassen eines Luft-Kraftstoff-Verhältnisses in dem Ansaugkanal (3) strömungsabwärts einer Verbindungsstelle mit der AGR-Durchführung (31), die den Auslasskanal (4) strömungsabwärts des Partikelfilters (4) und den Ansaugkanal (3) strömungsabwärts des Ansaugluftmengen-Erfassungsmittels (7) zum Erfassen der Frischluftmenge, die in dem Ansaugkanal (3) strömt, verbindet, und die einen Teil des Abgases, das in dem Auslasskanal (4) strömt, zu dem Ansaugkanal (3) rückführt,

wobei die Abgasmenge, die durch das Partikelfilter (10) hindurchtritt, auf der Grundlage der erfassten Frischluftmenge, einer dem Verbrennungsmotor zugeführten Kraftstoffmenge und dem erfassten Luft-Kraftstoff-Verhältnis erfasst wird.

18. Abgasreinigungsverfahren nach Anspruch 17, wobei die Abgasmenge, die durch das Partikelfilter (10) hindurchtritt, aus einer Summe aus der erfassten Frischluftmenge, der dem Verbrennungsmotor zugeführten Kraftstoffmenge und einem Wert, der durch Dividieren der erfassten Frischluftmenge durch das erfasste Luft-Kraftstoff-Verhältnis gewonnen wird, erfasst wird.

19. Abgasreinigungsverfahren nach einem der Ansprüche 11 bis 18, wobei eine Wärmemenge, die das Abgas auf das Partikelfilter (10) überträgt, aus einer aus einem Multiplikationsprodukt der Abgasmenge, die durch das Partikelfilter (10) hindurchtritt, und der Temperatur des Abgases, das in den Partikelfilter (10) strömt, berechneten Einströmenergie geschätzt wird.

20. Abgasreinigungsverfahren nach Anspruch 19, wobei die Temperatur des Partikelfilters (10) durch Addieren eines Temperaturanstiegwertes des Partikelfilters (10), der als Wert gefunden wird, der durch Dividieren der Einströmenergie durch eine spezifische Wärme des Partikelfilters (10) gewonnen wird, und eine Masse des Parikelfilters (10) zu der zu einem momentanen Zeitpunkt auftretenden Temperatur des Partikelfilters (10) geschätzt wird.

## Revendications

1. Dispositif de purification d'échappement d'un moteur à combustion interne comprenant :

un filtre à particules (10) qui est prévu dans un passage d'échappement (4) et qui piège des particules dans le gaz d'échappement ;
un passage EGR (31) à travers lequel une partie du gaz d'échappement qui s'écoule dans le passage d'échappement (4) est renvoyée vers un passage d'admission (3) ;
des moyens de détection de quantité de gaz passant par le filtre (20) destinés à détecter une quantité de gaz d'échappement qui passe à travers le filtre à particules (10) ;
et
des moyens d'estimation de température de filtre (20) destinés à estimer une température du filtre à particules (10) en estimant une quantité de chaleur que le gaz d'échappement donne au filtre à particules (10) sur la base de la quantité de gaz d'échappement détectée par les moyens de détection de quantité de gaz passant par le filtre (20) et de la température de gaz d'échappement détectée par des moyens de détection de température de gaz d'échappement (12), **caractérisé en ce que** lesdits moyens de détection de température de gaz d'échappement (12) sont destinés à détecter une température de gaz d'échappement qui s'écoule dans le filtre à particules (10) ; et
**en ce que** les moyens de détection de quantité de gaz passant par le filtre détectent une quantité de gaz d'échappement qui passe à travers le filtre à particules (10) sur la base d'une pression différentielle entre un côté amont et un côté aval du filtre à particules (10) ou de la quantité de gaz d'échappement qui passe dans ledit passage EGR (31).

2. Dispositif de purification d'échappement selon la revendication 1, comportant en outre :

des moyens de détection de quantité d'air d'admission (7) destinés à détecter une quantité d'air frais qui s'écoule dans le passage d'admission (3) ;
un passage EGR (31) qui relie le passage d'échappement (4) en aval du filtre à particules (10) et le passage d'admission (3) en aval des moyens de détection de quantité d'air d'admission (7) et qui renvoie une partie du gaz d'échappement qui s'écoule dans le passage d'échappement (4) vers le passage d'admission (3) ; et
des moyens d'estimation de quantité de gaz EGR (20) destinés à estimer une quantité de gaz d'échappement qui s'écoule dans le passage EGR (31),

dans lequel les moyens de détection de quantité de gaz passant par le filtre (20) détecte la quantité de gaz d'échappement qui passe à travers le filtre à particules (10) sur la base de la quantité de gaz d'échappement estimée par les moyens d'estimation de quantité de gaz EGR (20) et de la quantité d'air frais détectée par les moyens de détection de quantité d'air d'admission (7).

3. Dispositif de purification d'échappement selon la revendication 2, comportant en outre :

des moyens de détection de pression d'air d'admission (17) destinés à détecter une pression dans le passage d'admission (3) sur un côté aval d'un emplacement où le passage EGR (31) est relié,

dans lequel les moyens d'estimation de quantité de gaz EGR (20) stocke une relation entre la quantité d'air frais détectée par les moyens de détection de quantité d'air d'admission (7) et la pression détectée par les moyens de détection de pression d'air d'admission (17) et la quantité de gaz d'échappement qui s'écoule dans le passage EGR (31), et estime la quantité de gaz d'échappement qui s'écoule dans le passage EGR (31) à partir de la relation.

**4.** Dispositif de purification d'échappement selon la revendication 2 ou 3, dans lequel les moyens de détection de quantité de gaz passant par le filtre (20) détectent la quantité de gaz d'échappement qui passe à travers le filtre à particules (10) à partir d'une somme de la quantité d'air frais détectée par les moyens de détection de quantité d'air d'admission (7), de la quantité de gaz d'échappement estimée par les moyens d'estimation de quantité de gaz EGR (20), et d'une quantité de carburant délivrée à un cylindre du moteur à combustion interne.

**5.** Dispositif de purification d'échappement selon la revendication 1, comportant en outre :

des moyens de détection de pression différentielle (11) destinés à détecter la pression différentielle entre le côté amont et le côté aval du filtre à particules (10) ;
des moyens d'estimation de colmatage (20) destinés à estimer un degré de colmatage du filtre à particules (10) ; et
des moyens d'estimation de pression différentielle provoquée par le colmatage (20) destinés à estimer une pression différentielle provoquée par le colmatage qui est une pression différentielle provoquée par le colmatage du filtre à particules (10) dans la pression différentielle détectée par les moyens de détection de pression différentielle (11), sur la base du degré de colmatage du filtre à particules (10) estimé par les moyens d'estimation de colmatage (20),

dans lequel les moyens de détection de quantité de gaz passant par le filtre (20) détectant la quantité de gaz d'échappement qui passe à travers le filtre à particules (10), sur la base d' une valeur obtenue en soustrayant la pression différentielle estimée par les moyens d'estimation de pression différentielle provoquée par le colmatage (20) de la pression différentielle détectée par les moyens de détection de pression différentielle (11).

**6.** Dispositif de purification d'échappement selon la revendication 5, comportant en outre :

une soupape EGR (32) qui ajuste une section de passage du passage EGR (31),

dans lequel les moyens d'estimation de colmatage (20) estime le degré de colmatage du filtre à particules (10) quand la soupape EGR (32) est fixée dans un état entièrement fermé.

**7.** Dispositif de purification d'échappement selon la revendication 1, comportant en outre :

des moyens de détection de quantité d'air d'admission (7) destinés à détecter une quantité d'air frais qui entre dans le passage d'admission (3) ;
un passage EGR (31) qui relie le passage d'échappement (4) en aval du filtre à particules (10) et le passage d'admission (3) en aval des moyens de détection de quantité d'air d'admission (7) et qui renvoie une partie du gaz d'échappement qui entre dans le passage d'échappement (4) vers le passage d'admission (3) ; et
des moyens de détection de rapport air d'admission-carburant (13) destinés à détecter un rapport air-carburant dans le passage d'admission (3) sur un côté aval d'un emplacement où le passage EGR (31) est relié,

dans lequel les moyens de détection de quantité de gaz passant par le filtre (20) détectent la quantité de gaz d'échappement qui passe à travers le filtre à particules (10) sur la base de la quantité d'air frais détectée par les moyens de détection de quantité d'air d'admission (7), d'une quantité de combustible délivrée au moteur à combustion interne, et du rapport air-carburant détecté par les moyens de détection de rapport air d'admission-carburant (13).

**8.** Dispositif de purification d'échappement selon la revendication 7, dans lequel les moyens de détection de quantité de gaz passant par le filtre (20) détectent la quantité de gaz d'échappement qui passe à travers le filtre à particules (10) à partir d'une somme de la quantité d'air frais détectée par les moyens de détection de quantité d'air d'admission (7), de la quantité de carburant délivrée au moteur à combustion interne, et d'une valeur obtenue en divisant la quantité d'air frais détectée par les moyens de détection de quantité d'air d'admission (7) par le rapport air-carburant détecté par les moyens de détection de rapport air d'admission-carburant (13).

**9.** Dispositif de purification d'échappement selon l'une quelconque de revendications 1 à 8, dans lequel les moyens d'estimation de température de filtre (20) estiment une quantité de chaleur que le gaz d'échappement donne au filtre à particules (10) à partir d'une énergie d'apport calculée à partir d'un produit de multiplication de la quantité de gaz d'échappement qui passe à travers le filtre à particules (10) et de la température de gaz d'échappement qui s'écoule dans le filtre à particules (10).

**10.** Dispositif de purification d'échappement selon la revendication 9, dans lequel les moyens d'estimation de température de filtre (20) estiment la température du filtre à particules (10) en ajoutant une valeur d'élévation de température du filtre à particules (10) trouvée comme une valeur obtenue en divisant l'énergie d'apport par une chaleur spécifique du filtre à particules (10) et une masse du filtre à particules (10) à la température du filtre à particules (10) apparaissant à un instant donné.

**11.** Procédé de purification d'échappement de moteur à combustion interne comportant les étapes consistant à :

détecter une quantité de gaz d'échappement qui passe à travers un filtre à particules (10) sur la base d'une quantité de gaz d'échappement qui s'écoule dans un passage EGR (31) qui renvoie une partie du gaz d'échappement qui s'écoule dans un passage d'échappement (4) vers un passage d'admission (3) ou sur la base d'une pression différentielle entre un côté amont et un côté aval du filtre à particules (10) ;
détecter une température de gaz d'échappement qui s'écoule dans le filtre à particules (10) ; et
estimer une température du filtre à particules (10) en estimant une quantité de la chaleur que le gaz d'échappement donne au filtre à particules (10) sur la base de la quantité détectée de gaz d'échappement qui passe à travers le filtre à particules (10) et de la température détectée du gaz d'échappement.

**12.** Procédé de purification d'échappement selon la revendication 11 comportant en outre les étapes consistant à :

détecter une quantité d'air frais qui s'écoule dans le passage d'admission (3) ; et
estimer la quantité de gaz d'échappement qui s'écoule dans le passage EGR (31) qui relie le passage d'échappement (4) en aval du filtre à particules (10) et le passage d'admission (3) en aval des moyens de détection de quantité d'air d'admission (7) et qui renvoie une partie du gaz d'échappement qui s'écoule dans le passage d'échappement (4) vers le passage d'admission (3),

dans lequel la quantité de gaz d'échappement qui passe à travers le filtre à particules (10) est détectée sur la base de la quantité estimée de gaz d'échappement et de la quantité détectée d'air frais.

**13.** Procédé de purification d'échappement selon la revendication 12 comportant en outre l'étape consistant à :

détecter une pression dans le passage d'admission (3) en aval d'un emplacement où le passage EGR (31) est relié,

dans lequel la quantité de gaz d'échappement qui s'écoule dans le passage EGR (31) est estimée à partir d'une relation entre la quantité détectée d'air frais, la pression détectée dans le passage d'admission (3), et la quantité de gaz d'échappement qui s'écoule dans le passage EGR (31).

**14.** Procédé de purification d'échappement selon la revendication 12 ou 13, selon lequel la quantité de gaz d'échappement qui passe à travers le filtre à particules (10) est détectée à partir d'une somme de la quantité détectée d'air frais, de la quantité estimée de gaz d'échappement, et d'une quantité de carburant délivrée à un cylindre du moteur à combustion interne.

**15.** Procédé de purification d'échappement selon la revendication 11 comportant en outre les étapes consistant à :

détecter la pression différentielle entre le côté amont et le côté aval du filtre à particules (10) ;
estimer un degré de colmatage du filtre à particules (10) ; et
estimer une pression différentielle provoquée par le colmatage qui est une pression différentielle provoquée par le colmatage du filtre à particules (10) parmi la pression différentielle détectée, sur la base du degré estimé de colmatage du filtre à particules (10),

dans lequel la quantité de gaz d'échappement qui passe à travers le filtre à particules (10) est détectée sur la base d'une valeur obtenue en soustrayant la pression différentielle estimée de la pression différentielle détectée.

**16.** Procédé de purification d'échappement selon la revendication 15, selon lequel le degré de colmatage du filtre à particules (10) est estimé quand une soupape EGR (32) qui ajuste une section de passage du passage EGR (31) qui renvoie une partie du gaz d'échappement qui s'écoule dans le passage d'échappement (4) vers le passage d'admission (3) est fixée dans un état entièrement fermé.

**17.** Procédé de purification d'échappement selon la revendication 11, comportant en outre les étapes consistant à :

détecter une quantité d'air frais qui s'écoule dans le passage d'admission (3) ; et
détecter un rapport air-carburant dans le passage d'admission (3) en aval d'un emplacement de raccordement avec le passage EGR (31) qui relie le passage d'échappement (4) en aval du filtre à particules (10) et le passage d'admission (3) en aval des moyens de détection de quantité d'air d'admission (7) destinés à détecter la quantité d'air frais qui s'écoule dans le passage d'admission (3) et qui renvoie une partie du gaz d'échappement qui s'écoule dans le passage d'échappement (4) vers le passage d'admission (3),

dans lequel la quantité de gaz d'échappement qui passe à travers le filtre à particules (10) est détectée sur la base de la quantité détectée d'air frais, d'une quantité de carburant délivrée au moteur à combustion interne, et du rapport air-carburant détecté.

**18.** Procédé de purification d'échappement selon la revendication 17, selon lequel la quantité de gaz d'échappement qui passe à travers le filtre à particules (10) est détectée à partir d'une somme de la quantité détectée d'air frais, de la quantité de carburant délivrée au moteur à combustion interne, et d'une valeur obtenue en divisant la quantité détectée d'air frais par le rapport air-carburant détecté.

**19.** Procédé de purification d'échappement selon l'une quelconque des revendications 11 à 18, selon lequel une quantité de chaleur que le gaz d'échappement donne au filtre à particules (10) est estimée à partir d'une énergie d'apport calculée à partir d'un produit de multiplication de la quantité de gaz d'échappement qui passe à travers le filtre à particules (10) et de la température de gaz d'échappement qui s'écoule dans le filtre à particules (10).

**20.** Procédé de purification d'échappement selon la revendication 19, selon lequel la température du filtre à particules (10) est estimée en ajoutant une valeur d'élévation de température du filtre à particules (10) trouvée comme une valeur obtenue en divisant l'énergie d'apport par une chaleur spécifique du filtre à particules (10) et une masse du filtre à particules (10) à la température du filtre à particules (10) apparaissant à un instant donné.

F I G . 1

# FIG.2

```
        ┌─────────────┐
        │    START    │
        └─────────────┘
               │
               ▼
    ┌─────────────────────┐
    │   DETECT INTAKE     │──── S101
    │   FRESH AIR Ga      │
    └─────────────────────┘
               │
               ▼
    ┌─────────────────────┐
    │ ESTIMATE LOW-PRESSURE│──── S102
    │ EGR GAS AMOUNT Gegr  │
    └─────────────────────┘
               │
               ▼
    ┌─────────────────────┐
    │ CALCULATE FUEL INJECTION │──── S103
    │      AMOUNT Gf      │
    └─────────────────────┘
               │
               ▼
    ┌─────────────────────┐
    │ CALCULATE AMOUNT Gdpf OF │──── S104
    │ EXHAUST GAS THAT PASSES  │
    │    THROUGH FILTER   │
    └─────────────────────┘
               │
               ▼
    ┌─────────────────────┐
    │ DETECT IN-COMING GAS │──── S105
    │ TEMPERATURE Tin OF FILTER │
    └─────────────────────┘
               │
               ▼
    ┌─────────────────────┐
    │  CALCULATE INFLOW   │──── S106
    │    ENERGY Ein       │
    └─────────────────────┘
               │
               ▼
    ┌─────────────────────┐
    │ CALCULATE FILTER BED │──── S107
    │    TEMPERATURE      │
    └─────────────────────┘
               │
               ▼
        ┌─────────────┐
        │     END     │
        └─────────────┘
```

# F I G . 3

Pim

Gegr

Ga

# FIG.4

```
        ┌─────────────┐
        │    START    │
        └──────┬──────┘
               │
   ┌───────────▼───────────┐
   │    DETECT DETECTED    │     S201
   │ DIFFERENTIAL PRESSURE △Pa │
   └───────────┬───────────┘
               │
   ┌───────────▼───────────┐
   │    ESTIMATE TRAPPED   │     S202
   │       AMOUNT Gpm      │
   └───────────┬───────────┘
               │
   ┌───────────▼───────────┐
   │    ESTIMATE PM-CAUSED │     S203
   │ DIFFERENTIAL PRESSURE Pp │
   └───────────┬───────────┘
               │
   ┌───────────▼───────────┐
   │  DETECT IN-COMING GAS │     S204
   │ TEMPERATURE Tin OF FILTER │
   └───────────┬───────────┘
               │
   ┌───────────▼───────────┐
   │   CALCULATE INFLOW    │     S205
   │      ENERGY Ein       │
   └───────────┬───────────┘
               │
   ┌───────────▼───────────┐
   │   CALCULATE FILTER BED │    S206
   │      TEMPERATURE      │
   └───────────┬───────────┘
               │
        ┌──────▼──────┐
        │     END     │
        └─────────────┘
```

# FIG.5

# FIG.6

```
START
```

S301

CONDITION FOR
DETERMINATION ABOUT
CLOGGING SATISFIED
?

NO

YES

| FULLY CLOSE LOW-PRESSURE EGR VALVE | ~S302 |

| CALCULATE FRESH AIR AMOUNT Ga | ~S303 |

| CALCULATE DIFFERENTIAL PRESSURE $\Delta P$ | ~S304 |

| CALCULATE FILTER-PASSING EXHAUST GAS TEMPERATURE Tcat | ~S305 |

| CALCULATE FUEL INJECTION AMOUNT Gf | ~S306 |

| CALCULATE UPSTREAM-OF-FILTER PRESSURE P6 | ~S307 |

| CALCULATE VOLUME FLOW AMOUNT Vcat OF EXHAUST GAS THAT PASSES THROUGH FILTER | ~S308 |

| CALCULATE EXHAUST GAS AVERAGE FLOW VELOCITY Ucat | ~S309 |

| STORE $\Delta P/Ucat^2$ | ~S310 |

```
END
```

# FIG.7

```
        ┌─────────────┐
        │    START    │
        └─────────────┘
               │
               ▼
  ┌───────────────────────┐
  │ DETECT INTAKE AIR-FUEL │──── S401
  │      RATIO AFR         │
  └───────────────────────┘
               │
               ▼
  ┌───────────────────────┐
  │  DETECT INTAKE FRESH   │──── S402
  │     AIR AMOUNT Ga      │
  └───────────────────────┘
               │
               ▼
  ┌───────────────────────┐
  │ CALCULATE FUEL INJECTION │──── S403
  │      AMOUNT Gf         │
  └───────────────────────┘
               │
               ▼
  ┌───────────────────────┐
  │ CALCULATE AMOUNT Gdpf OF │──── S404
  │ EXHAUST GAS THAT PASSES │
  │    THROUGH FILTER       │
  └───────────────────────┘
               │
               ▼
  ┌───────────────────────┐
  │  DETECT IN-COMING GAS   │──── S405
  │ TEMPERATURE Tin OF FILTER │
  └───────────────────────┘
               │
               ▼
  ┌───────────────────────┐
  │   CALCULATE INFLOW      │──── S406
  │     ENERGY Ein          │
  └───────────────────────┘
               │
               ▼
  ┌───────────────────────┐
  │  CALCULATE FILTER BED   │──── S407
  │     TEMPERATURE         │
  └───────────────────────┘
               │
               ▼
        ┌─────────────┐
        │    END      │
        └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2045069207 A
- DE 19753842
- EP 1498594 A